(19) **Europäisches Patentamt / European Patent Office / Office européen des brevets**

(11) **EP 3 833 034 A1**

(12) **EUROPEAN PATENT APPLICATION**

(43) Date of publication:
**09.06.2021 Bulletin 2021/23**

(51) Int Cl.:
**H04N 21/24** *(2011.01)*      **H04N 21/845** *(2011.01)*

(21) Application number: **20210946.8**

(22) Date of filing: **04.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2015 EP 15193441**

(62) Document number(s) of the earlier application(s) in accordance with Art. 76 EPC:
**16793817.4 / 3 371 978**

(27) Previously filed application:
**04.11.2016 PCT/EP2016/076637**

(71) Applicants:
• **Koninklijke KPN N.V.**
  **3072 AP Rotterdam (NL)**
• **Nederlandse Organisatie voor toegepast-natuurwetenschappelijk Onderzoek TNO**
  **2595 DA 's-Gravenhage (NL)**

(72) Inventors:
• **STOKKING, Hans Maarten**
  **2292 CH Wateringen (NL)**
• **PRINS, Martin**
  **2564 BL The Hague (NL)**
• **NIAMUT, Omar Aziz**
  **3135 PA Vlaardingen (NL)**

(74) Representative: **Wuyts, Koenraad Maria**
**Koninklijke KPN N.V.**
**Intellectual Property Group**
**P.O. Box 25110**
**3001 HC Rotterdam (NL)**

Remarks:
This application was filed on 01.12.2020 as a divisional application to the application mentioned under INID code 62.

(54) **CONTIGUOUS STREAMING OF MEDIA STREAM**

(57) A method and controller are provided for performing a non-contiguous streaming of a media stream. Such non-contiguous streaming comprises transmitting a selected portion of the media stream to the receiver while omitting transmitting at least an immediately adjacent portion of the media stream so as to enable uninterrupted play-out of the selected portion by the receiver after a pre-determined play-out delay. Such non-contiguous streaming may be advantageously used when the content bitrate exceeds the available network bandwidth. Namely, instead of streaming all of the media stream, only one or more selected and non-adjacent portions thereof are streamed, while omitting transmitting one or more intermediate portions. Effectively, the available network bandwidth may be allocated for transmitting only selected portions of the media stream to enable said portions each to be played-out uninterruptedly by the receiver after a pre-determined play-out delay and at the original content bitrate. Buffer underruns at the receiver may thereby be prevented.

Fig. 2

**Description**

**FIELD OF THE INVENTION**

The invention relates to a method and controller for streaming a media stream via a network to a receiver. The invention further relates to a stream source and a receiver. The invention further relates to a computer program product comprising instructions for causing a processor system to perform the method.

**BACKGROUND ART**

Media content such as video content and audio content is commonly delivered to users in a digital form. If media content has a temporal aspect, and in particular is associated with a timeline which indicates how the media content is to be played-out over time, such digital form is typically referred to as a media stream. Media streams may be delivered to a receiver of a user via a (media distribution) network. In particular, a media stream may be streamed to the receiver, which allows the receiver to begin play-out of the media stream before having received the entire media stream.

Examples of media streams include video streams such as camera-recorded or computer-rendered streams, audio streams such as microphone-recorded streams, timed text streams such as subtitle streams or social-media streams, timed events streams which show an advertisement image or perform an action at the receiver, and multimedia streams comprising different types of media streams.

Stream sources, such as streaming servers and devices, may be bandwidth-limited in their transmission of media content to a receiver, in that the content bitrate of the media stream representing the media content may exceed the available network bandwidth to the receiver. A number of situations may arise here, including one in which the situation is structural, e.g., the content bitrate is exceeding the available network bandwidth (almost) continuously, and one in which the situation is more temporary, e.g., where bandwidth fluctuations cause a temporary lack of bandwidth, even though on the long run there may be enough bandwidth to stream at a certain content bitrate. This second situation may be described as causing 'jitter' and is often resolved by using a (large enough) jitter buffer at the receiver, and/or by skipping transmission of certain frames. The concept behind the latter is that viewers may hardly notice a single missing frame, and/or that one or a few missing frames may be reconstructed at the receiver by temporal interpolation of adjacent frames.

However, in case of a more structural shortage of bandwidth, the above solutions to a (very) temporary lack of network bandwidth do not apply. To nevertheless enable streaming of the media content to the receiver, it is known to reduce the content bitrate, e.g., by transcoding or encoding at lower bitrate, and thus reduce the quality (e.g., resolution, frame or sample rate, etc.) of the media stream to fit the available network bandwidth. Also, HTTP Adaptive Streaming such as MPEG-DASH may be used to adapt the bitrate to the network circumstances. Disadvantageously, the content bitrate may be reduced so much that it offers a poor experience for viewers. Nowadays, many viewers are using high-end devices with high-resolution screens, and these viewers may be accustomed to, and expect high-quality video. Simply lowering content bitrate to make it fit the available network bandwidth may become counter-productive if people cease watching the content due to lack of video quality. There are also other reasons for not desiring the content bitrate to be reduced to fit the available network bandwidth. For example, it may be computationally complex to transcode the media stream to a lower bitrate, or lower bitrates may just not be supported by the stream source. Also, when applying certain computations on the content, such as fingerprinting or watermarking algorithms, these may require a certain minimum quality.

**SUMMARY OF THE INVENTION**

It would be advantageous to enable a streaming of media content to a receiver when the available network bandwidth is structurally lower than the content bitrate.

In accordance with a first aspect of the invention, a method may be provided for streaming a media stream via a network to a receiver, the media stream representing media content encoded at a content bitrate, and the network having an available network bandwidth. The method may comprise, when the available network bandwidth is lower than the content bitrate, performing a non-contiguous streaming of the media stream, said non-contiguous streaming comprising transmitting a selected portion of the media stream to the receiver while omitting transmitting at least an immediately adjacent portion of the media stream so as to enable uninterrupted play-out of the selected portion by the receiver after a pre-determined play-out delay.

In accordance with another aspect of the invention, a computer program may be provided for causing a processor system to perform the method.

In accordance with another aspect of the invention, a controller may be provided for controlling a streaming of a media stream from a stream source to a receiver via a network, the media stream representing media content encoded at a content bitrate, and the network having an available network bandwidth. The controller may be configured for, when the available network bandwidth is lower than the content bitrate, controlling the streaming of the media stream so to as to effect a non-contiguous streaming of the media stream, said non-contiguous streaming comprising the stream source transmitting a selected portion of the media stream to the receiver while omitting transmitting at least an immediately adjacent portion of the media stream so as to enable uninterrupted play-out of the selected portion by the receiver after a pre-determined play-out delay.

In accordance with other aspects of the invention, a stream source and/or a receiver may be provided which may each comprise the controller.

In accordance with another aspect of the invention, a receiver may be provided for receiving a media stream via a network from a stream source, wherein the receiver may be configured for, when the stream source performs a non-contiguous streaming of the media stream in which a selected portion of the media stream is transmitted to the receiver while at least an immediately adjacent portion of the media stream is not transmitted, applying a pre-determined delay to the play-out of the receiver so as to obtain an uninterrupted play-out of the selected portion.

The above measures involve streaming a media stream in real-time via a network to a receiver, e.g., from a stream source. The network bandwidth towards the receiver may be constrained, in that the available network bandwidth is lower than the content bitrate. In particular, the constraint may be structural rather than representing bandwidth fluctuations in the network. For example, the upload speed of a mobile phone may be limited. In such a case, the streaming of a portion of the media stream takes longer than the portion's duration and thus the duration of its play-out. Namely, when streaming a media stream, the data of the media stream which is received by the receiver is normally stored in a buffer, and removed from the buffer during or after play-out of said data. In the situation that the streaming takes place at a lower bandwidth than the content bitrate, the buffer is filled slower than it is emptied by the playout. If for a certain period the network bandwidth is lower than the content bitrate, e.g. the situation is structural for several seconds or minutes, buffer underruns will normally occur and playout of the media stream is interrupted due to the unavailability of data of the media stream to be played-out.

The inventors have recognized that in such cases, it may be preferable to stream the media stream in a non-contiguous manner, in that not all of the media stream is streamed, but rather one or more selected and non-adjacent portions thereof, while at the same time omitting transmitting one or more intermediate portions. Effectively, the available network bandwidth may be allocated for transmitting only selected portions of the media stream, which may, after a pre-determined play-out delay, each be played uninterruptedly by the receiver and at the original content bitrate. In other words, buffer underruns may be prevented. It is thus purposefully not attempted to stream the entire media stream at the content bitrate since this would, due to insufficient available network bandwidth, result in interrupted play-out due to buffer underruns. Such non-contiguous streaming may also avoid the need for selecting a content bitrate which is so low that it does not meet the quality expectation of viewers, and/or a transcoding of the media stream, and/or make it unsuitable for further content processing such as applying fingerprinting and/or watermarking algorithms.

In a specific and non-limiting example, the content bitrate may be twice the available network bandwidth. The media stream may then be streamed in a non-contiguous manner by alternatingly transmitting, and omitting transmitting, portions of a certain duration, e.g., having a length of several seconds to tens of seconds.

It is noted that in the above and following, the term 'portion' refers to a length of media content, i.e., a temporal portion. For example, within the context of HTTP Adaptive Streaming (HAS), such a portion may be comprised of one or more temporally adjacent chunks, with a chunk being, e.g., a fragment (which may comprise media data and associated metadata to enable decoding and playback of said data) or a segment (which may comprise multiple fragments) of the media stream. However, this is not a limitation, in that the portion may also have any other suitable length.

In an embodiment, the selected portion may have a portion duration, and the method may further comprise determining the portion duration as a function of at least the content bitrate and the available network bandwidth so as to enable said uninterrupted play-out of the selected portion by the receiver after the pre-determined play-out delay. The inventors have recognized that, given an available network bandwidth, the selection of a longer portion duration entails a longer play-out delay and/or a lower content bitrate. As such, depending on the desired play-out delay and/or the desired (or available) content bitrate, a suitable portion duration may be chosen. For example, in case of an available network bandwidth of 1Mb/s, a content bitrate of 2Mb/s, and a desired (e.g., maximum) play-out delay of 10 seconds, a 10 second portion duration may be selected. Namely, if said 10 second portion is transmitted to the receiver, which takes 20 seconds to complete, the receiver may commence uninterrupted play-out of the portion after a play-out delay of 10 seconds. It will be appreciated that, for the ease of explanation, details such as decoding delays, display buffer delays, de-packetization delays, etc., are ignored, yet may be taken into account when determining the portion duration or when calculating other parameters.

In an embodiment, the method may further comprise determining the play-out delay as a function of at least the content bitrate, the available network bandwidth and the portion duration. To ensure uninterrupted play-out of the selected portion, the receiver may need to apply a play-out delay to the play-out. Namely, if such play-out delay were not applied, the play-out would be interrupted due to the content bitrate exceeding the available network bandwidth and the streaming of the selected portion thus taking longer than the actual play-out of the selected portion. In such a situation, buffer underruns may occur. The play-out delay may thus be pre-determined before streaming of the selected portion, for example as a function of the content bitrate, the available network bandwidth and the portion duration. Compared to a 'typical' play-out delay due to a buffering by the receiver to compensate for jitter and bandwidth fluctuations, the pre-determined play-out delay is typically longer and ensures uninterrupted play-out of the selected portion. In other words, the pre-determined play-out delay is purposefully pre-determined and then applied by the receiver to ensure uninterrupted play-out of the selected portion.

In an embodiment, the method may further comprise communicating the pre-determined play-out delay in the form of a play-out delay parameter to the receiver. The play-out delay may be pre-determined outside of the receiver, e.g., by the stream source or a controller controlling the non-contiguous streaming, and communicated to the receiver in the form of a play-out delay parameter. For example, such communication may take place before the streaming of the selected portion, or as part of said streaming, e.g., in a header or metadata of the selected portion or using out-of-band signaling using e.g. websockets. A non-limiting example is that the play-out delay may be communicated to the receiver in the context of adaptive streaming as part of a manifest, e.g., a Media Presentation Description.

In an embodiment, the method may further comprise determining the play-out delay as a minimum buffering time or minimum buffer level to be applied by the receiver in the buffering of the selected portion before starting play-out. The play-out delay may thus specified as a minimum buffering time, e.g., 10 seconds, or as a minimum buffer level, e.g., 10 Mbyte. It is noted that the minimum buffering time is related in magnitude to the minimum buffer level by way of the content bitrate.

In an embodiment, the method may further comprise determining the portion duration and/or the play-out delay in accordance with:

$$playout\ delay = \frac{(portion\ duration * content\ bitrate)}{network\ bandwidth} - portion\ duration$$

The inventors have recognized that, in order to obtain a non-contiguous streaming which enables a transmitted portion to be played-out without interruptions, a trade-off may need to be made between the available network bandwidth, the portion duration, the play-out delay and the content bitrate. In case the available network bandwidth and the content bitrate are seen as a given, a trade-off may be made between the portion duration and the play-out delay in accordance with the above formula. It is noted that since all four factors are interrelated, also other trade-offs may be made which may involve adjusting the content bitrate and/or the available network bandwidth. An example of the former is transcoding or selecting from different quality streams, and an example of the latter is the allocation of more network bandwidth.

In an embodiment, the method may further comprise selecting the media stream from a plurality of media streams representing media content encoded at different content bitrates, wherein said selecting of the media stream may be based on the content bitrate of the media stream matching a bitrate selection criterion, the bitrate selection criterion being a function of at least one of: the available network bandwidth, the portion duration and the pre-determined play-out delay. In case of adaptive streaming, different quality streams may be available, representing the same content at different bitrates. Alternatively, the media stream may be transcoded to a different bitrate. As such, the content bitrate may be considered as a parameter which may be adjusted to obtain a suitable trade-off with other factors determining the non-contiguous streaming, such as the available network bandwidth, the portion duration and the pre-determined play-out delay. A non-limiting example may be that the available network bandwidth may be given, that a discrete set of content bitrates is available, and that a selection is made from one of the content bitrates to obtain a trade-off between quality (content bitrate), waiting time before play-out commences (pre-determined play-out delay) and length of the uninterrupted play-out (duration of the selected portion).

In an embodiment, the method may further comprise signaling the receiver that the media stream is streamed in a non-contiguous manner. For example, such signaling may be used to cause the receiver to apply the pre-determined play-out delay to its play-out. It is noted that such signaling may alternatively or additionally include signaling the portion duration and/or content bitrate of the selected portion to the receiver.

In an embodiment, the method may further comprise streaming a second media stream which is associated with the media stream to the receiver in a contiguous manner. The first-mentioned media stream may be associated with a second media stream which may both be transmitted to the receiver. It may be desirable to apply the non-contiguous streaming to the first media stream but not the second media stream. A reason for this is that the second media stream may be considered to be more important. For example, in case of the transmission of a video stream and an associated audio stream, the audio stream may be considered to be more important for communication purposes. Another reason may be that the second media stream may have a (significantly) lower content bitrate than the first media stream, thus not necessitating the non-contiguous streaming of the second media stream.

In an embodiment, the method may further comprise streaming a plurality of media streams to the receiver in a non-contiguous manner, the plurality of media streams representing different recordings of an event, and selecting the portions to be streamed in the non-contiguous manner to provide the receiver with a more contiguous streaming presentation of the event than would have been provided by the non-contiguous streaming of one media stream. It may be that the constraint in network bandwidth may be at or near a stream source. For example, in case of an event such as a concert, there may be insufficient base station bandwidth to support hundreds or even thousands of smartphones streaming a live video feed of the concert. In such and similar cases, the non-contiguous streaming may be applied to several stream sources, and the selected portions which are then transmitted by the different stream sources may be later on, e.g., in the network or at the receiver, combined to obtain a more contiguous streaming presentation of the event than would have been provided by the non-contiguous streaming of one media stream by one stream source. Effectively, the stream sources may perform a non-contiguous streaming in which the portions being selected are from different moments in time and thus are complementary.

In an embodiment, the method may further comprise selecting a portion of other content to replace the immediately adjacent portion of the media stream in the play-out of the media stream. For example, the receiver may select a portion of locally available content, or a portion of content available from a different source, e.g., from a different media stream which is streamed from a different stream source, which may then be played-out by the receiver following or preceding the transmitted selected portion. A non-limiting example of other content may be an advertisement.

It will be appreciated by those skilled in the art that two or more of the above-mentioned embodiments, implementations, and/or aspects of the invention may be combined in any way deemed useful.

Modifications and variations of the controller, the stream source, the receiver and/or the computer program product, which correspond to the described modifications and variations of the method, can be carried out by a person skilled in the art on the basis of the present description.

## BRIEF DESCRIPTION OF THE DRAWINGS

These and other aspects of the invention are apparent from and will be elucidated with reference to the embodiments described hereinafter. In the drawings,

Fig. 1 shows a stream source streaming a media stream to a receiver via a network comprising an ingress network, a core network and an egress network;
Fig. 2 is similar to Fig. 1, while showing the stream source to be a video-recording device and the receiver to be a display device, such as a television;
Fig. 3 illustrates a non-contiguous streaming of a media stream, in which selected portions of the media stream are transmitted to the receiver while omitting transmitting intermediate portions of the media stream to the receiver;
Fig. 4A shows a first part of a message exchange for establishing a non-contiguous streaming of a media stream from a stream source to a receiver;
Fig. 4B shows a second part of the message exchange of Fig. 4A;
Fig. 5 shows the non-contiguous streaming of a video stream and the contiguous streaming of an audio stream associated with the video stream;
Fig. 6 shows a message exchange between a receiver and a stream source, in which the receiver effects a non-contiguous streaming of a media stream;
Fig. 7 shows a message exchange between a receiver and a stream source or controller, in which the stream source or controller effects a non-contiguous streaming of a media stream;
Fig. 8 shows two stream sources streaming alternating portions of a media stream to a receiver to provide the receiver with a more contiguous streaming; and
Fig. 9 shows an exemplary data processing system.

It should be noted that items which have the same reference numbers in different Figures, have the same structural features and the same functions, or are the same signals. Where the function and/or structure of such an item has been explained, there is no necessity for repeated explanation thereof in the detailed description.

### List of reference numerals

The following list of reference numbers is provided for facilitating the interpretation of the drawings and shall not be construed as limiting the claims.

1-6   portion of media stream
10    media stream

STR_<X>    streaming of portion <X> of media stream
TL        timeline

20    content bitrate
40    available network bandwidth

60    pre-determined play-out delay
80    portion duration

100, 102    receiver
120, 122    stream source

200    core network
202    ingress network
204    egress network

1000    exemplary data processing system
1002    processor
1004    memory element
1006    system bus
1008    local memory
1010    bulk storage device
1012    input device
1014    output device
1016    network adapter
1018    application

## DETAILED DESCRIPTION OF EMBODIMENTS

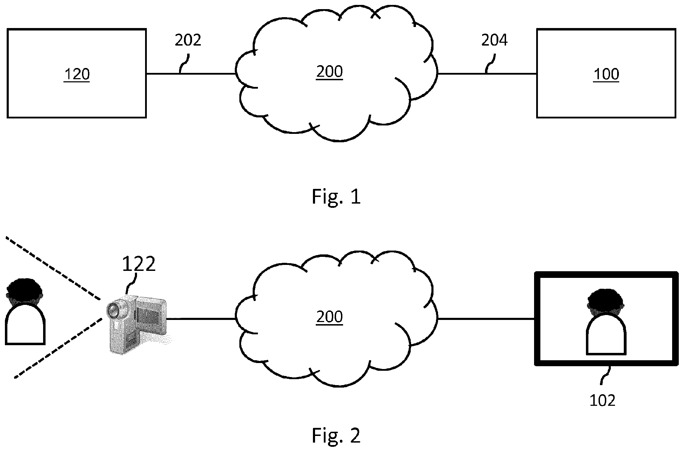

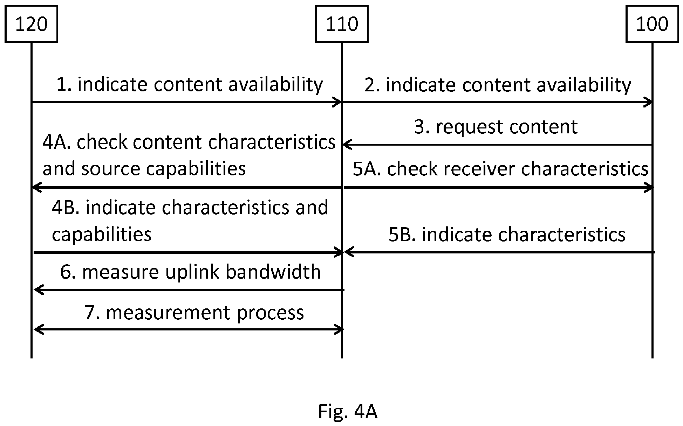

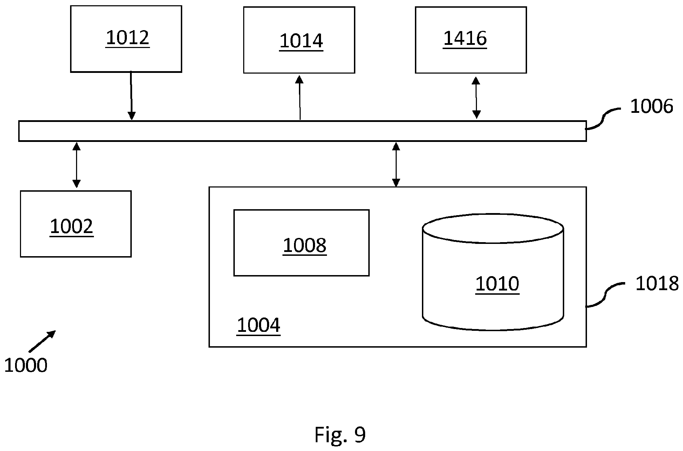

The following embodiments relate to a method and controller for effecting a non-contiguous streaming of a media stream from a stream source to a receiver. A general explanation is provided with reference to Figs. 1-3, whereas Figs. 4A-8 show specific embodiments and Fig. 9 shows an exemplary data processing system for use in implementing any of the embodiments. It will be appreciated that none of the embodiments is to be understood as representing limitations of the invention.

Fig. 1 illustrates a stream source 120 streaming a media stream to a receiver 100 via a network. In the example of Fig. 1, the network is shown to comprise a core network 200 (shown symbolically as a cloud), an ingress network 202 with which the stream source 120 is connected to the core network 200 and an egress network 204 with which the receiver 100 is connected to the core network 200 (shown symbolically as lines connecting the cloud with the stream source and receiver).

It may be that the available bandwidth in the network is too limited for a real-time streaming of the media stream. Namely, the content bitrate of the media stream may exceed the available bandwidth between the stream source 120 and the receiver 100. Such a limitation in available network bandwidth, e.g., a 'bottleneck', may occur at various points within the network between the stream source 120 and the receiver 100, e.g., in the ingress network 202, in the core network 200 or in the egress network 204, or in a combination thereof. For example, it may occur that the ingress network 202 lacks sufficient bandwidth, as may occur in a situation as depicted in Fig. 2 where a user uses a video-recording device 122 to share a camera view with other(s), e.g., by streaming the recorded media stream to a display device 102 of another user. An example of a video-recording device 122 is a smartphone, which may be connected to the core network 200 via a cellular network, Wi-Fi or other type of access network. The ingress network may offer insufficient bandwidth for such streaming of the recorded media stream by the video-recording device 122, e.g., by the network being temporarily 'overloaded' due to many users attempting to stream media streams of an event, or for various other reasons, including, e.g., limited coverage, spectral interference by other wireless signals or other electromagnetic noise. Such reasons may be structural in that they apply to a longer period of time, e.g., tens of seconds, minutes, hours, rather than pertaining to jitter or bandwidth fluctuations which typically last milliseconds up-to a few seconds.

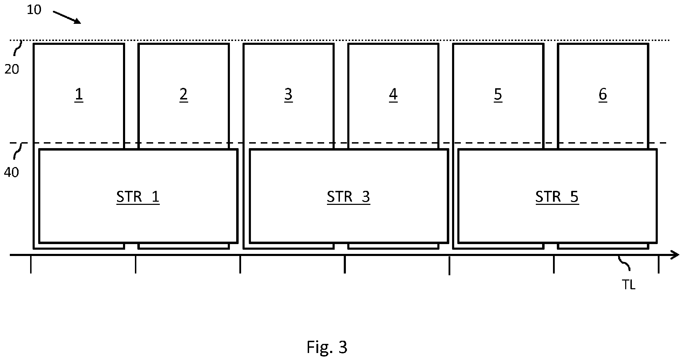

Fig. 3 illustrates a non-contiguous streaming of a media stream, which may be performed when the available network bandwidth is lower than the content bitrate. Such non-contiguous streaming may comprise transmitting a selected portion of the media stream to the receiver while omitting transmitting at least an immediately adjacent portion of the media stream so as to enable uninterrupted play-out of the selected portion by the receiver after a pre-determined play-out delay. This aspect of the invention is at least partially based on the insight that, when it is not possible to stream the media stream in real-time, rather than nevertheless attempting streaming the media stream in a contiguous manner (which typically results in frequent buffer underruns and thus a poor experience for a user), only non-contiguous portions thereof are transmitted. As the non-contiguous portions represent less data, this may fit the available network bandwidth. Moreover, the receiver may play-out each of the transmitted non-contiguous portions uninterruptedly after a pre-determined play-out delay, i.e., playing out each portion uninterruptedly (even though there may be time gaps between the play-out of the different portions).

This concept is illustrated in Fig. 3 where a number of consecutive portions 1-6 of the media stream 10 are shown, each having a width along the horizontal axis (timeline TL) which represent its duration, e.g., its play-out time in real-time, and each having a height along the vertical axis representing its content bitrate 20. The available network bandwidth 40 is also indicated schematically along the vertical axis, being about half the content bitrate. In accordance with the non-contiguous streaming, the available network bandwidth 40 may be used for streaming only every other portion of the media stream 10, e.g., portions 1, 3 and 5, as schematically indicated by STR_1, STR_3 and STR_5. Portions 2, 4 and 6 are thus purposefully not transmitted, to rather enable uninterrupted play-out of portions 1, 3 and 5.

**Example use cases**

The following are examples of use cases in which non-contiguous streaming of a media stream may be relevant and advantageously applied.

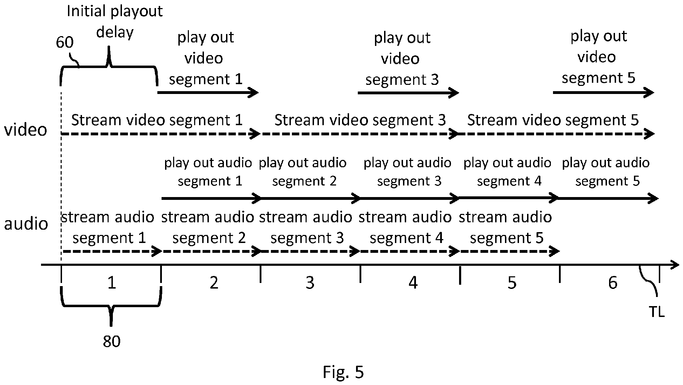

- In communication, the audio is of particular importance. The non-contiguous streaming may thus be applied to a video stream, or video component of a media stream, whereas an associated audio stream, or audio component of a media stream, may be contiguously transmitted. For example, in a streaming presentation of a webinar with a person presenting slides, parts of the video of the person presenting may be transmitted, whereas others may be 'skipped', i.e., not transmitted. It is noted that at the receiver side, the slides which are presented may be available, e.g., as a separate media stream or component of a media stream, and may be used to replace the non-transmitted portions of the video in the presentation of the media stream. It is noted that a similar use case will be further explained with reference to Fig. 5.
- There may be a plurality of media streams available which represent different recordings of a same event. For example, multiple users may stream captures or recordings of the same soccer game from a soccer stadium. Whereas it may not be possible to stream each of the media streams in a contiguous manner, the plurality of media streams may be streamed in a non-contiguous manner and may be composed, e.g., by the receiver or another entity, to form a more contiguous streaming presentation of the event than would have been provided by the non-contiguous streaming of one media stream.
- In certain situations, the content of a media stream is interesting only for a part of the time. For example, for a security camera, the content may be of interest only when there is movement. Non-contiguous streaming may be applied here in that high-quality video may be streamed only when there is movement, whereas in the absence of movement, no video or a low quality version of the video may be streamed.
- In a video conference, the video of participants having a bandwidth-limited connection may be only shown part of the time, e.g., when they are speaking, in which case the applying of a pre-determined play-out delay as described in the present disclosure may enable uninterrupted play-out of the transmitted video portions.

In order to effect a non-contiguous streaming which enables uninterrupted play-out, a number of factors may be taken into account: the available network bandwidth, the portion duration (the duration of the portion of the media stream to be streamed), the playout delay (the delay to be applied by the receiver before starting playout of the portion being received) and the content bitrate (the bitrate of the media stream). A trade-off between the above factors may be made, e.g., in accordance with:

$$playout\ delay = \frac{(portion\ duration * content\ bitrate)}{network\ bandwidth} - portion\ duration$$

As can be seen from the above formula, if the content bitrate is larger than the network bandwidth, the predetermined playout delay will be larger than 0.

For example, in case of an uplink bandwidth of 1 Mb/s, a portion duration of 10 seconds, and a content bitrate of 2Mb/s, the portion will take approximately (2Mb/s * 10s) / 1Mb/s = 20 seconds to stream. Since the portion will play-out for 10 seconds (i.e. portion duration is 10 seconds), the playout delay may be determined to be 10 seconds to enable continuous playback from the start of playout. In that case, the playout of the last part of the content will coincide with this last part being streamed. It is noted that this example omits small factors like jitter buffering, network delays, capture delays, decoding delays, etc., which are to be taken into account in an implementation.

It is noted that the available network bandwidth is typically a given, and may be determined (e.g. measured, queried for from the network) before the start of the non-contiguous streaming in any of the ways known per se in the art. Alternatively, the available network bandwidth may be seen as a determinable factor, e.g., in case additional bandwidth may be allocated at a cost. The remaining three factors are also interrelated, e.g., in the following manner:

- A longer portion duration typically results in having to determine a longer playout delay and/or a lower content bitrate.
- A shorter play-out delay typically results in having to determine a shorter portion duration and/or a lower content bitrate.
- A higher content bitrate typically results in having to determine a shorter portion duration and/or a longer predetermined playout delay.

For example, when selecting a particular content bitrate (e.g., quality level) and knowing the available network bandwidth, one may either select a portion duration and determine the required predetermined playout delay or determine a playout delay and determine the (maximum) portion duration. Having determined all four factors, the content bitrate, portion duration and predetermined playout delay may be controlled, and where needed transmitted to the receiver, and streaming may commence. Here, the term 'controlling' may refer to signaling the determined factors to the stream source and/or the receiver, thereby enabling the stream source and/or the receiver to adhere to the choices on determined play-out delay, content bitrate and portion duration.

It is noted that the content bitrate may be controlled at the stream source, as the stream source may be configuring the bitrate at which to stream. It is noted that quality may be expressed in terms of content bitrate, as higher bitrate typically equals higher quality. Higher quality may be obtained by various means: higher resolution, higher frame rate, higher image (encoding) quality. As such, if a certain minimum quality is needed, this may translate into a certain (minimum) content bitrate.

The portion duration may also be controlled at the stream source, as the stream source may need to stream only selected portions of the entire content in case of non-contiguous streaming. The predetermined playout delay may be controlled at the receiver, as the receiver needs to wait and buffer parts of the transmitted portion(s) of the media stream for some time before playout of said portion(s) can actually start.

As such, non-contiguous streaming may be effected by determining all four of the abovementioned factors, controlling playout delay, quality (content bitrate) and portion duration, starting streaming the selected portion, waiting at the receiver for the predetermined playout delay, and then playing out said portion without interruption. It is noted that once streaming of the selected portion has been completed, e.g., when the selected portion has been received at the receiver, the same steps may be performed again for transmitting a next portion of the media stream. Alternatively, a next portion may be streamed concurrently with the selected portion, e.g., if the next portion is streamed from another stream source having sufficient bandwidth to the receiver.

Fig. 4A shows a first part of a message exchange for establishing a non-contiguous streaming of a media stream from a stream source to a receiver. In this example, a controller 110 is provided which may be used to effect the non-contiguous streaming of the media stream from a stream source 120 to a receiver 100. The controller 110 may implement functionality of the earlier described method. Note that the controller here is drawn separate from the stream source and the receiver. In practice the controller may indeed be a separate entity or implemented in a separate entity such as a proxy. However, the controller may equally be implemented in the stream source or the receiver or both, e.g., being distributed in functionality.

It is noted that the portions of the media stream being selected for streaming may, but do not need to, match the segments of a segmented media stream, e.g., segments of MPEG-DASH. For example, when calculating the predetermined playout delay based on the content duration, the content duration may be 1 MPEG-DASH segment, but may also be 2 or 3 or more MPEG-DASH segments. It may even be possible for a portion to be less than 1 MPEG-DASH segment, e.g., half a MPEG-DASH segment (which may be requested using byte ranges).

In steps 1-3 of Fig. 4A, a stream source 120 and a receiver 100 are connected with each other. There are many ways known in the art of media streaming on how to accomplish this, resulting in the stream source 120 and/or a content platform announcing content availability, and a receiver 100 selecting and requesting content. For example, a user may select a video on a website, in a similar way as is now done on, e.g., YouTube, or a user may select a video in an EPG (Electronic Program Guide) or EPG-like application, e.g., similar to Netflix. Essentially the outcome of these steps may be a receiver indicating (paraphrased) 'I would like to receive this content from this source'. Next, the controller 110 may determine and select the four earlier-mentioned factors, namely the available network bandwidth, the portion duration, the playout delay and the content bitrate. In steps 4A and 4B, the controller 110 may collect content characteristics and source capabilities. A content source, such as the stream source 120, may be able to offer content portions of various lengths, and it may be able to offer various content bitrates (with various resolutions, frame rates, qualities, etc.). The stream source 120 may also signal other aspects about the content, e.g., what the content actually is (e.g., a view of the beach, a stream of a soccer game in progress, a party with dancing), as this may help the controller 110 in selecting a proper portion duration. In steps 5A and 5B, the controller 110 may also collect available characteristics of the receiver 100. The most basic of this may be screen size or video window size, and available player buffer size. The screen size, including screen resolution, may indicate what 'quality' (i.e. content bitrate and content resolution, frame rate and encoding quality) may be acceptable to an end user of the receiver 100. Also, a limited player buffer size may be a limiting factor in the maximum predetermined playout delay that can be selected.

Note that steps 5A/5B are of a (more) optional nature than steps 4A and 4B. To actually stream a content portion, the stream source 120 may configure a bitrate at which to stream and select a duration of the portion. To determine an acceptable quality, this may also be a choice at the service level, e.g., '480p streaming at 20 fps is the minimum quality level deemed sufficient for our users'. As modern receivers usually have sufficient on-board memory, it may be assumed that the receiver 100 can buffer a sufficient amount of time for the non-contiguous streaming of the media stream to function correctly. Next, in steps 6 and 7, the available network bandwidth may be determined for streaming the content portion. There are various ways in which to actually determine the network bandwidth, as known per se in the art, e.g., by read-out of network parameters (e.g., reading out negotiated link bandwidth in a (managed) network), or by actively or passively probing the network.

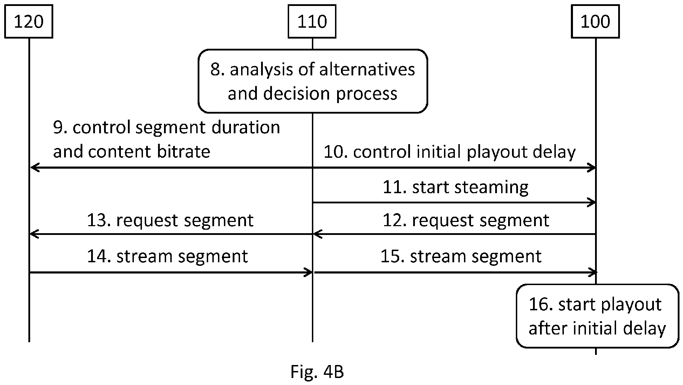

Fig. 4B shows a second part of the message exchange of Fig. 4A. In step 8, all factors have been determined and decided upon: portion duration, predetermined playout delay and content bitrate. In step 9, the content portion duration and content bitrate are signaled to the stream source 120 to enable the stream source to configure these. In step 10, the required predetermined playout delay is signaled to the receiver 100 to enable the receiver 100 to configure this. Next, in step 11, the receiver 100 is signaled to request actual streaming, which is done in steps 12 and 13, after which the actual streaming is performed in steps 14 and 15. Finally, in step 16, the receiver 100 applies the predetermined playout delay and thereby delays play-out by the same amount, and afterwards plays out the content portion without interruptions.

Note that certain steps may be combined. For example, steps 1 and 4A/4B may be combined, indicating characteristics and capabilities directly with the content announcement. Also, when the stream source measures network bandwidth beforehand, the content announcement in step 1 could also contain steps 6 and 7. In the same manner, steps 3 and 5A/5B could be combined. Steps 10 and 11 could be combined, and step 9 could also be combined here: the requested portion duration and content bitrate could be indicated to the receiver, which could include these in its request to the stream source in step 12. Also, steps 12 and 13 can be separate, whereby the request goes through the platform. However, these steps can also be performed directly between receiver and stream source. The same is true for actually streaming the content in steps 14 and 15. Also, in the example of Figs. 4A, 4B, all input is collected first, and then in step 8 decisions are made. This could also be iteratively, e.g., in the form of a multi-step negotiation process. For example, it may be first decided on content bitrate, then possible portion durations may be requested from the stream source, a portion duration may be selected, and only thereafter the available bandwidth may be measured and the playout delay be determined.

Fig. 5 shows an example of non-contiguous streaming of a video stream and the contiguous streaming of an audio stream associated with the video stream. In this example, the video bitrate is about twice as high as the available network bandwidth. This means that approximately half of the video stream can be played-out. In a segmented video stream, e.g., using MPEG-DASH, this means that half the segments can be played-out.

Fig. 5 shows the non-contiguous streaming of such a segmented video stream, showing both the streaming and playout of segments along a timeline TL. Note that in this example, the selected content duration matches the (DASH) segment duration. It is shown that the streaming of the video segments takes about twice as long as their individual play-out duration 80. As such, only about half of the video segments can be played-out. For audio, the streaming may take a similar amount of time as the play-out, and thus all audio segments may be played-out. In this example, two things may be observed. First, only every other video segment is played-out. This may be done after a predetermined playout delay 60, referred to as 'initial play-out delay' in Fig. 5, to enable the continuous playout of each video segment. The transmission of the video segment is started from the beginning of the content segment (not shown explicitly in Fig. 5, e.g., content is available from the vertical dash left of the content segment number on the timeline). Secondly, the audio in this example is played-out continuously, which may be a service design choice: audio is less bandwidth demanding, and continuous audio will make for a more continuous, and thus better experience. Note that for synchronized playout of audio with video, the playout of the audio is to be delayed as well. Also note that because audio playback is continuous, the predetermined playout delay for subsequent video segments (i.e. segments 3 and 5 in this example) is fixed: it should start when the beginning of the video segment aligns with the audio segment to which it belongs. Alternatively, the audio play-out time could also be adjusted to a certain extent to accommodate for inter-media synchronization, e.g., by using known principles such as skipping during silence, using a temporarily (slightly) increased or reduced playout rate, etc.

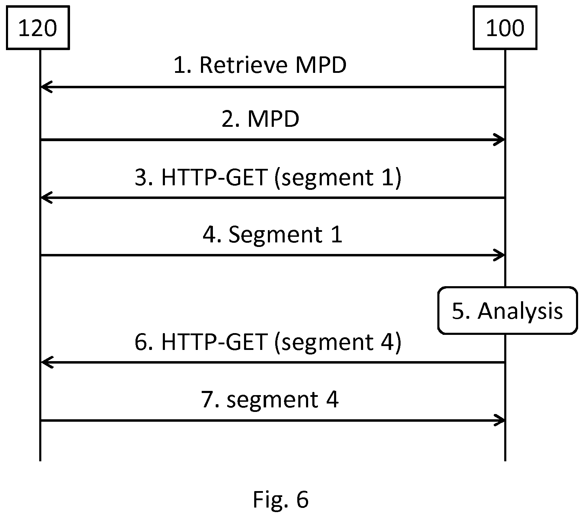

Fig. 6 shows a message exchange between a receiver and a stream source, in which the receiver effects a non-contiguous streaming of a media stream. Namely, the receiver may autonomously effect the non-contiguous streaming of the media stream without requiring modification of the stream source or a separate controller (as was the case in the example of Figs. 4A, 4B), for example by comprising the controller or being configured for performing its function. In this example, the receiver 100 is aware about the availability of segmented content available using MPEG-DASH. To retrieve this content, the receiver 100, in step 1, retrieves the Media Presentation Description (MPD) describing the content from the stream source 120. After receiving the MPD in step 2, the receiver 100 retrieves the first segment using the normal HTTP-GET mechanism in step 3. This segment is then delivered by the stream source 120 to the receiver 100 in step 4. After having received the segment, the receiver 100 may now analyze the situation in step 5. Namely, the delivery of the first segment may have taken a certain amount of time, which is indicative of the bandwidth available in the network. It is noted that in practice, a number of segments may be delivered first, to enable a better estimation of the available bandwidth. The MPD describes all available bitrates at which the content is available, so the receiver 100 may decide what the minimum bitrate is that is acceptable in this case. The MPD also describes the length of the DASH segments. As such, all information is available to determine how many segments can be retrieved and what amount of playout delay is necessary for uninterrupted playback during segments. For example, the receiver 100 may request segment 4 in step 6, and thus omit requesting the intermediate segments 2 and 3. Segment 4 may then be delivered by the stream source 120 in step 7 and may be played-out in a non-interrupted manner by the receiver 100 after the playout delay as determined in step 5. It is noted that the above manner of requesting non-adjacent portions leads to non-continuous playback, in that the requested portions themselves may be played continuously, i.e., without interruptions, but in-between portions there may be gaps in which no content is played back. A (more) continuous experience may be created by retrieving other portions from another source, e.g., from another server containing video footage of the same event. In this respect, it is noted that MPEG-DASH segments are normally all usable individually, e.g., each segment can be requested and played-out on its own.

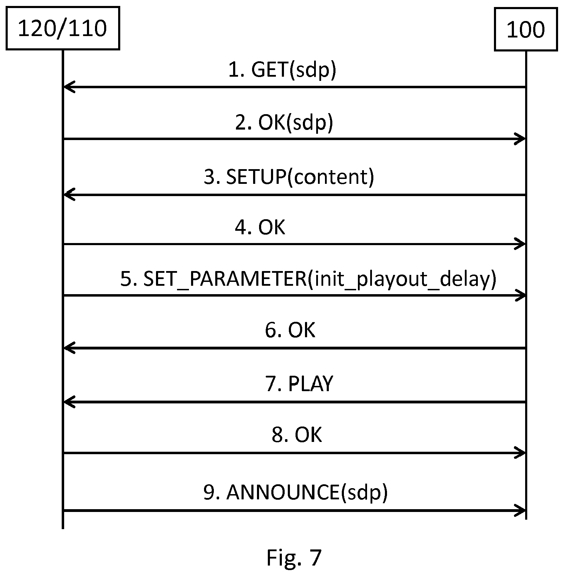

Fig. 7 shows a message exchange between a receiver and a stream source or controller, in which the stream source or controller effects a non-contiguous streaming of a media stream. In particular, this example describes how non-contiguous streaming may be effected using RTSP as a streaming control protocol. In this example, the stream source 120 is also the controller 110, or the controller 110 acts as a proxy towards the receiver 100. The following only refers to the stream source 120 but may equally apply to a controller acting as proxy. The receiver 100 may start by requesting certain content in step 1, and the stream source 120 may respond in step 2 by delivering the SDP describing the media. This SDP may contain the information on just a single portion, e.g., it may describe the first portion that can be played by the receiver 100. Next, in steps 3 and 4, the receiver 100 sets up the connection for that first portion. In step 5, the stream source 120 sets the predetermined playout delay at the receiver. Note that this is a parameter that may not yet exist as part of the session description (for instance as part of the Session Description Protocol), but may rather be newly introduced. In step 6, the receiver 100 issues a PLAY request, starting the actual transmission of the content, and may next (not shown) play back the content after waiting for the predetermined playout delay as indicated. When the stream source 120 wants to indicate another portion to be played, it can send an ANNOUNCE as shown in step 9. This ANNOUNCE may contain a new media object, described in the SDP. After this ANNOUNCE, the receiver 100 can continue with steps equivalent to steps 3-8 to play back the next portion. Note that this example may involve modifications of the receiver, in that the receiver 100 should be configured to understand the new 'init_playout_delay' parameter, and the receiver 100 should issue a SETUP request followed by a PLAY request when new portions are announced by the stream source.

As an alternative to using the ANNOUNCE feature of RTSP the client and the server may, during RTSP setup, negotiate non-contiguous streaming, so the client may keep listening on a certain port for new (non-contiguous) media data after the first portion has been received and played out.

It is further noted that RTSP would also enable a client-controlled scenario, in that a receiver may indicate playout ranges when issuing a PLAY request using Normal Play Time (NPT) ranges, thus enabling the receiver to play back only certain portions of a larger content. Also note that various portions on various servers could be indicated, so that a (more) continuous media experience may be created even though at least one stream source suffers from limited bandwidth towards the receiver.

It is noted that the non-contiguous streaming of a media stream may also be effected within the context of MPEG-DASH, as already indicated with reference to Fig. 6 and further elaborated in the following. It is noted that the receiver is here termed a 'client'. In MPEG-DASH, clients typically retrieve an MPD (Media Presentation Description) that describes the media stream and how a (HTTP) client can retrieve the associated media. The media stream consists of one or more segments, which are to be played-out according to a media presentation timeline. In an MPD, the segment availability may be indicated by the segment availability start time (@availabilityStartTime). Playout of segments should start at the presentation time. This presentation time can be given an additional delay through the use of @suggested-PresentationDelay. If a receiver is configured to immediately start downloading a segment at the segment availability start time, and starts presenting it at the presentation start time taking into account the suggested presentation delay, this allows the controller to control the receiver behavior in terms of when downloading (i.e., streaming) should start and when presentation should start.

Note that typically an MPEG-DASH segment will only be played-out if it is completely downloaded. To nevertheless enable the uninterrupted play-out of a selected portion which is transmitted as part of a non-contiguous streaming using the @availabilityStartTime and @suggestedPresentationDelay, a portion may be selected which consist of multiple MPEG-DASH segments. This allows to start playout of the portion while the downloading continues, e.g., by playing out the first MPEG-DASH segments of a sequence of MPEG-DASH segments, while downloading of subsequent / remaining MPEG-DASH segments of the selected content portion continues.

Another way to control the predetermined playout delay in MPEG-DASH is by indicating a minimum buffer time to a client, e.g., using the @minBufferTime. This allows to set a minimum buffer time for the entire MPD. However, if the MPD is continuous for a single (bottlenecked) stream source, this method may not work, as the content bitrate is higher than the network bandwidth. However, if multiple sources are providing portions, or if the media stream is discontinuous, this will allow performing a non-contiguous streaming. An example of a discontinuous stream may be a user with a smartphone recording and streaming an event, but only recording off and on: pressing the record button if something interesting seems to be happening, and stopping the recording once it has happened. MPEG-DASH does allow for discontinuities in the media presentation, e.g., by using the SegmentTimeline instead of the regular segment duration attribute. As such, MPEG-DASH segments may be used from various stream sources, with at least one of the stream sources having a bottleneck and the pre-determined play-out delay being applied to the portion(s) retrieved from this stream source.

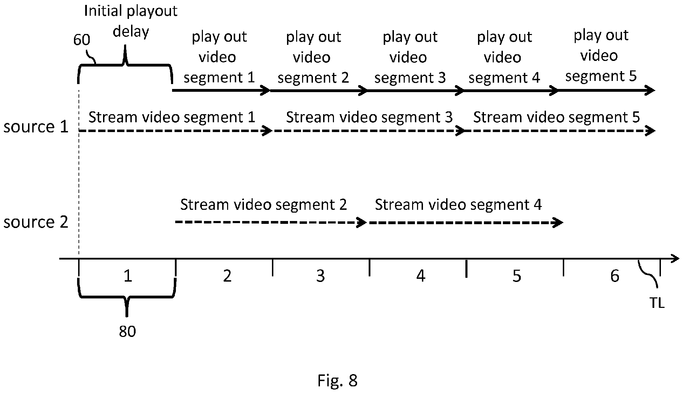

An example of this is shown in Fig. 8. Here, sources 1 and 2 are both bottlenecked sources. By alternating streaming segments from both sources, e.g. get segment 1 from source 1, get segment 2 from source 2, get segment 3 from source 1, etc., this allows circumventing the bottleneck. This approach may be used if the bottleneck is not the same for both sources, as the receiver needs to be able to get segments from both sources in parallel, as shown in Fig. 8.

Such alternating streaming may be enabled by MPEG-DASH. In MPEG-DASH, it is e.g. possible to define a base URL in an MPD. In the live profile, this MPD may be updated every so often. This may e.g. be done by giving the MPD a minimumUpdatePeriod, after which the receiver may retrieve an MPD update. It is also possible to 'expire' an MPD by indicating this in a segment, which will force the client to retrieve a new MPD. The new MPD may contain a different base URL pointing to a different source, and will thus force the receiver to switch to another source.

Another way of doing this in DASH is by having a segment list that contains hard-coded URLs. These URLs can alternate between various sources as well. As an example, showing segments to be available alternating between server1 and server2:

```
<Representation mimeType="video/mp4"
        frameRate="24"
        bandwidth="3200000"
        codecs="avc1.640828" width="1280" height="720">
<SegmentList duration="10">
  <SegmentURL media="http://server1.kpn.com/segment-0.mp4"/>
  <SegmentURL media="http://server2.kpn.com/segment-1.mp4"/>
  <SegmentURL media="http://server1.kpn.com/segment-2.mp4"/>
  <SegmentURL media="http://server2.kpn.com/segment-3.mp4"/>
  <SegmentURL media="http://server1.kpn.com/segment-4.mp4"/>
</SegmentList>
</Representation>
```

This would allow for a (more) continuous playback at the receiver. The non-contiguous streaming may also be used with non-continuous playback, e.g., by retrieving only so many portions from a bottlenecked source as the bandwidth will allow. Note that the @minBufferTime will delay playout within one MPEG-DASH segment, so this offers the ability to start downloading but delay playout within one MPEG-DASH segment.

Note that since both the @availabilityStartTime and the @minBufferTime are defined at the MPD level, they will be typically the same for all MPEG-DASH segments in the MPD. However, the MPEG-DASH standard may be adapted to allow for more fine-grained control of segment downloading times and segment playout times, e.g., by allowing the @minBufferTime or the @availabilityStartTime to be defined at the segment level instead of at the MPD level. Also, both @minBufferTime and @availabilityStartTime may be advantageously combined.

Fig. 9 is a block diagram illustrating an exemplary data processing system that may be used in embodiments as described in this disclosure. Such data processing systems include data processing entities described in this disclosure, including servers, client computers, encoders and decoders, etc. Data processing system 1000 may include at least one processor 1002 coupled to memory elements 1004 through a system bus 1006. As such, the data processing system may store program code within memory elements 1004. Further, processor 1002 may execute the program code accessed from memory elements 1004 via system bus 1006. In one aspect, data processing system 1000 may be implemented as a computer that is suitable for storing and/or executing program code. It should be appreciated, however, that data processing system 1000 may be implemented in the form of any system including a processor and memory that is capable of performing the functions described within this specification.

Memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive or other persistent data storage device. The processing system 1000 may also include one or more cache memories (not shown) that provide temporary storage of at least some program code in order to reduce the number of times program code must be retrieved from bulk storage device 1010 during execution.

Input/output (I/O) devices depicted as input device 1012 and output device 1014 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device 1012 and/or output device 1014 may be coupled to data processing system 1000 either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data processing system and a data transmitter for transmitting data to said systems, devices and/or networks. Modems, cable modems, and Ethernet cards are examples of different types of network adapter that may be used with data processing system 1000.

As pictured in Fig. 9, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

In one aspect, for example, data processing system 1000 may represent a receiver data processing system. In that case, application 1018 may represent a receiver application that, when executed, configures data processing system 1000 to perform the various functions described herein with reference to a "receiver" or "client". Examples of receivers can include, but are not limited to, televisions, monitors, projectors, media players and recorders, set-top boxes, smartphones, cameras, PCs, laptops, tablet devices, smart watches or glasses, professional video equipment, etc.

In another aspect, data processing system may represent a stream source. In that case, application 1018 may represent a stream source application that, when executed, configures data processing system 1000 to perform the various functions described herein with reference to a "stream source". Examples of stream sources can include, but are not limited to, (HTTP) streaming servers, stream buffer which buffer media stream(s) within a media distribution network, and recording devices which comprise audiovisual sensors. Examples of such recording devices include smartphones, compact cameras, professional cameras, smart watches, smart glasses, etc. For example, data processing system may represent an (HTTP) server in which case application 1018, when executed, may configure data processing system to perform (HTTP) server operations. In another aspect, data processing system may represent a controller. In that case, application 1018 may represent a controller application that, when executed, configures data processing system 1000 to perform the various functions described herein with reference to a "controller".

## General aspects and alternatives

The following describes various general aspects and alternatives.

The predetermined playout delay may be given, e.g., signaled to the receiver, in the form of a time parameter, e.g., specifying a delay as a number of seconds. Alternatively, the predetermined playout delay may also be given as a buffer parameter, e.g., defining to start playout once the buffer contains X MBs of data. As the content bitrate is known, the delay in seconds or in buffer size is equivalent.

A stream source, such as a capture device, may already transmit a media stream non-contiguously, e.g., by only being able to occasionally transmit a portion of media stream. In this case, uninterrupted play-out of the selected portion of media stream is possible by applying the pre-determined play-out delay at the receiver.

The decision on which portion of the media stream to transmit and which to omit transmitting may be performed in a content aware manner. For example, it may be detected when a person is speaking in a media stream, e.g., using techniques known per se in the art of image and audio analysis, and only transmit those portions.

The non-contiguous streaming of the media stream may be applied in the context of live capture and streaming, in which case the stream source is likely a recording device. However, said non-contiguous streaming may also be applied to the real-time streaming of recorded content, in which case the stream source may be a server or node in the network. It is noted that a media buffer or cache in the network also may be considered as a stream source in case there exists a bottleneck in available network bandwidth between the media buffer or cache and the receiver.

As available network bandwidth may fluctuate over time, one may dynamically determine the portion duration based on the actual network bandwidth, e.g. as measured over time. Note that actual network bandwidth may fluctuate over time and any measurement may only be an approximation of the actual bandwidth. As such, if the network temporarily offers more bandwidth than initially expected, one may allow a longer portion duration, or the content bitrate may be increased.

In case multiple ones of the previously mentioned four factors can be freely determined, the solution space may be limited by applying constraints to said factors. For example, the final choice of factors may be limited by: the portion duration being between 10 and 20 seconds, play-out delay being at most 5 seconds and the content bitrate being at least 500 kbps. A choice may be made within these constraints.

The control of portion duration and quality may be done indirectly by the receiver. For example, if the stream source offers multiple quality levels and multiple durations, e.g., as may be the case when using MPEG-DASH, the receiver may determine portion duration and quality by requesting them from the source.

Moreover, although the non-contiguous streaming of the media stream may be typically applied to video streaming, it may also be applied to different types of media streaming, e.g., audio, in which case non-contiguous streaming may be advantageous in very low-bandwidth networks, e.g., in ad-hoc military networks.

The non-contiguous streaming of the media stream may be combined with existing other methods to deal with limited bandwidth, e.g., with rate-distortion optimization techniques. Additionally or alternatively, the stream source may try to deliver each selected portion in a graceful degradation manner. For example, instead of consecutively streaming portions 1 through 6 (in that order) of a media stream, the source may place the portions in a high priority queue (1,3,5) and low priority queue (2,4,6) respectively, while applying a round robin mechanism where the high priority queue pre-empts the low priority queue. As such, the stream source will also try to transmit the low priority portions when sufficient network bandwidth is available and no high priority portions are available, instead of always omitting transmission.

The functionality of the controller may be implemented by a server, by several entities in a distributed manner, by the stream source, or by the receiver. It will be appreciated that the controller may signal a stream source the predetermined playout delay and required content bitrate, with the stream source only then indicating whether it is able to deliver a content portion, and if so, with what duration.

The non-contiguous streaming of the media stream may be effected within the context of media orchestration. The signaling of portion duration, content bitrate, predetermined playout delay between at least two of: the stream source, the controller and the receiver, may take place in a (standardized) media orchestration format.

It is noted that the non-contiguous streaming may be effected in the network rather than in the (original) stream source from which a media stream originated. For example, a stream source may stream contiguously to a proxy in the network, and the proxy in the network may perform the non-contiguous streaming to the receiver.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A method of streaming a media stream via a network to a receiver, the media stream representing media content encoded at a content bitrate, the network having an available network bandwidth, the method comprising:

   - when the available network bandwidth is lower than the content bitrate, performing a non-contiguous streaming of the media stream, said non-contiguous streaming comprising transmitting a selected portion of the media stream to the receiver while omitting transmitting at least an immediately adjacent portion of the media stream so as to enable uninterrupted play-out of the selected portion by the receiver after a pre-determined play-out delay.

**2.** The method according to claim 1, wherein the selected portion has a portion duration, and the method further comprises:

- determining the portion duration as a function of at least the content bitrate and the available network bandwidth so as to enable said uninterrupted play-out of the selected portion by the receiver after the pre-determined play-out delay.

**3.** The method according to claim 1 or 2, further comprising determining the play-out delay as a function of at least the content bitrate, the available network bandwidth and the portion duration.

**4.** The method according to claim 3, further comprising communicating the pre-determined play-out delay in the form of a play-out delay parameter to the receiver.

**5.** The method according to claim 3 or 4, further comprising determining the play-out delay as a minimum buffering time or minimum buffer level to be applied by the receiver in the buffering of the selected portion before starting play-out.

**6.** The method according to any one of the above claims, further comprising determining the portion duration and/or the play-out delay in accordance with:

$$playout\ delay = \frac{(portion\ duration * content\ bitrate)}{network\ bandwidth} - portion\ duration$$

**7.** The method according to any one of the above claims, further comprising selecting the media stream from a plurality of media streams representing media content encoded at different content bitrates, wherein said selecting of the media stream is based on the content bitrate of the media stream matching a bitrate selection criterion, the bitrate selection criterion being a function of at least one of: the available network bandwidth, the portion duration and the pre-determined play-out delay.

**8.** The method according to any one of the above claims, further comprising signaling the receiver that the media stream is streamed in a non-contiguous manner.

**9.** The method according to any one of the above claims, further comprising streaming a second media stream which is associated with the media stream to the receiver in a contiguous manner.

**10.** The method according to any one of the above claims, further comprising streaming a plurality of media streams to the receiver in a non-contiguous manner, the plurality of media streams representing different recordings of an event, and selecting the portions to be streamed in the non-contiguous manner to provide the receiver with a more contiguous streaming presentation of the event than would have been provided by the non-contiguous streaming of one media stream.

**11.** Computer program product comprising instructions for causing a processor system to perform the method according to any one of claims 1 to 10.

**12.** A controller for controlling a streaming of a media stream from a stream source to a receiver via a network, the media stream representing media content encoded at a content bitrate, the network having an available network bandwidth, the controller being configured for:

- when the available network bandwidth is lower than the content bitrate, controlling the streaming of the media stream so to as to effect a non-contiguous streaming of the media stream, said non-contiguous streaming comprising the stream source transmitting a selected portion of the media stream to the receiver while omitting transmitting at least an immediately adjacent portion of the media stream so as to enable uninterrupted play-out of the selected portion by the receiver after a pre-determined play-out delay.

**13.** The controller according to claim 12, wherein the controller is configured for effecting the non-contiguous streaming of the media stream by requesting said transmitting of the selected portion from the stream source while omitting requesting the transmitting of at least the immediately adjacent portion of the media stream.

**14.** A stream source comprising the controller according to claim 12, or a receiver comprising the controller according to claim 12 or 13.

**15.** A receiver for receiving a media stream via a network from a stream source, wherein the receiver is configured for, when the stream source performs a non-contiguous streaming of the media stream in which a selected portion of the media stream is transmitted to the receiver while at least an immediately adjacent portion of the media stream is not transmitted, applying a pre-determined delay to the play-out of the receiver so as to obtain an uninterrupted play-out of the selected portion.

120    202    200    204    100

Fig. 1

122    200    102

Fig. 2

Fig. 3

| 120 | | 110 | | 100 |
|---|---|---|---|---|

1. indicate content availability →  2. indicate content availability →

3. request content ←

4A. check content characteristics and source capabilities

5A. check receiver characteristics →

4B. indicate characteristics and capabilities →

5B. indicate characteristics ←

6. measure uplink bandwidth ←

7. measurement process ←→

Fig. 4A

120    110    100

8. analysis of alternatives
and decision process

9. control segment duration
and content bitrate            10. control initial playout delay

11. start steaming

13. request segment            12. request segment

14. stream segment            15. stream segment

16. start playout
after initial delay

Fig. 4B

Initial playout
60    delay

play out
video
segment 1

play out
video
segment 3

play out
video
segment 5

video    Stream video segment 1    Stream video segment 3    Stream video segment 5

play out audio    play out audio    play out audio    play out audio    play out audio
segment 1    segment 2    segment 3    segment 4    segment 5

audio    stream audio    stream audio    stream audio    stream audio    stream audio
segment 1    segment 2    segment 3    segment 4    segment 5

1    2    3    4    5    6

TL

80

Fig. 5

Fig. 6

Fig. 7

Fig. 8

Fig. 9

Europäisches
Patentamt

European
Patent Office

Office européen
des brevets

## EUROPEAN SEARCH REPORT

Application Number

EP 20 21 0946

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 892 686 B1 (THIBEAULT JASON [US] ET AL) 18 November 2014 (2014-11-18) | 1-5,7-15 | INV.<br>H04N21/24<br>H04N21/845 |
| A | * column 1, line 24 - line 27 *<br>* column 2, line 60 - column 3, line 8 *<br>* column 4, line 46 *<br>* column 6, line 38 - line 50 *<br>* column 7, line 1 - line 44 *<br>* column 14, line 36 - line 67 *<br>----- | 6 | |
| A | US 2015/007239 A1 (CRANMAN KEVIN [US] ET AL) 1 January 2015 (2015-01-01)<br>* paragraph [0015] *<br>* paragraph [0021] *<br>----- | 5 | |

TECHNICAL FIELDS
SEARCHED (IPC)

H04N

The present search report has been drawn up for all claims

| Place of search | Date of completion of the search | Examiner |
|---|---|---|
| Munich | 26 March 2021 | Ogor, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                              

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 0946

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2021

| Patent document cited in search report | | Publication date | Patent family member(s) | | Publication date |
|---|---|---|---|---|---|
| US 8892686 | B1 | 18-11-2014 | NONE | | |
| US 2015007239 | A1 | 01-01-2015 | CN | 105684458 A | 15-06-2016 |
| | | | EP | 3036910 A1 | 29-06-2016 |
| | | | US | 2015007239 A1 | 01-01-2015 |
| | | | WO | 2015001471 A1 | 08-01-2015 |

For more details about this annex : see Official Journal of the European Patent Office, No. 12/82

EPO FORM P0459